# EUROPÄISCHE PATENTSCHRIFT

(11) **EP 2 745 676 B1**
(45) Veröffentlichungstag und Bekanntmachung des Hinweises auf die Patenterteilung: **25.10.2017**
(21) Anmeldenummer: 13196204.5
(22) Anmeldetag: 09.12.2013
(51) Int. Cl.: A01G 3/053

(54) **Werkzeugmaschine mit mindestens einer zum Ausführen einer Hubbewegung antreibbaren Arbeitsklinge**
Machine tool with at least one work blade that can be driven to perform a reciprocating movement
Machine-outil comprenant au moins une lame de travail pouvant être entraînée pour exécuter un mouvement de va-et-vient

(30) Priorität: 19.12.2012 DE 102012223692
(43) Veröffentlichungstag der Anmeldung: 25.06.2014
(73) Patentinhaber: Robert Bosch GmbH, 70442 Stuttgart (DE)
(72) Erfinder: Zipf, Philipp, 70435 Stuttgart-Zuffenhausen (DE); Heizmann, Joachim, 78194 Immendingen (DE)

(56) Entgegenhaltungen:
- EP-A1- 2 266 389
- WO-A1-2011/154041
- CN-A- 102 388 753
- DE-B3-102010 007 714

## Beschreibung

### Stand der Technik

Die vorliegende Erfindung betrifft eine Werkzeugmaschine mit mindestens einer zum Ausführen einer Hubbewegung antreibbaren Arbeitsklinge.

Aus dem Stand der Technik sind derartige Werkzeugmaschinen bekannt, die z. B. im Garten- und/oder Landschaftsbereich zum Bearbeiten, d. h. zum Absägen, Abschneiden, Durchtrennen usw., von Pflanzen und/oder Pflanzenteilen Anwendung finden können. Diese Werkzeugmaschinen können z. B. als motorisch antreibbare Strauch- oder Heckenscheren ausgebildet sein und Arbeitsklingen aufweisen, an denen Schneid- bzw. Trennzähne zur Bearbeitung von Stauden und Sträuchern vorgesehen sind. Mindestens eine erste Arbeitsklinge ist hierbei zu einer Hubbewegung antreibbar, die zu Verschiebungen relativ zu mindestens einer zweiten, ebenfalls antreibbaren oder alternativ stillstehenden Arbeitsklinge führen, sodass die Schneid- bzw. Trennzähne dieser Arbeitsklingen z. B. in axialer Richtung der Arbeitsklingen alternierend aufeinander zu und voneinander weg bewegt werden und somit eine Schneid- bzw. Trennbewegung ausführen. Durch diese Schneid- bzw. Trennbewegung können z. B. Äste, die zwischen sich aufeinander zu bewegende Schneid- bzw. Trennzähne gebracht werden, sicher und zuverlässig durchtrennt bzw. durchgeschnitten werden.

Nachteilig am Stand der Technik ist, dass beim Ausschalten einer derartigen Werkzeugmaschine die Arbeitsklingen in ihrer jeweiligen Betriebsposition immobilisiert werden. Dies kann dazu führen, dass der Abstand zwischen den Schneid- bzw. Trennzähnen der Arbeitsklingen z. B. zu gering ist, um eine komfortable Wiederinbetriebnahme der Werkzeugmaschine zu ermöglichen.

Aus der CN 102 388 753 A ist ein Schneidwerkzeug mit einem Steuersystem für die Schneidblattzähne-Überlagerung und einer Schneidblattstellungs-Erfassungsvorrichtung bekannt deren Schneidblätter in einer Stellung mit überlagerten Zähnen stoppt, wenn ein Schalter ausgeschaltet ist.

### Offenbarung der Erfindung

Eine Aufgabe der Erfindung ist es daher, eine neue Werkzeugmaschine mit mindestens einer zum Ausführen einer Hubbewegung antreibbaren Arbeitsklinge bereitzustellen, bei der die Arbeitsklinge sicher und zuverlässig in einer zugeordneten Stopp-Position immobilisierbar ist.

Dieses Problem wird gelöst durch eine Werkzeugmaschine mit mindestens einer zum Ausführen einer Hubbewegung antreibbaren Arbeitsklinge. Eine Sensoranordnung ist vorgesehen, die dazu ausgebildet ist, zumindest beim Ausschalten der Werkzeugmaschine eine der Arbeitsklinge zugeordnete Betriebsposition zu erfassen, um ein Verschieben der Arbeitsklinge von der erfassten Betriebsposition in eine zugeordnete Stopp-Position zu ermöglichen.

Die Erfindung ermöglicht somit die Bereitstellung einer Werkzeugmaschine, bei der durch Verwendung einer Sensoranordnung eine der Arbeitsklinge zugeordnete Betriebsposition insbesondere beim Ausschalten der Werkzeugmaschine auf einfache Art und Weise erfasst werden kann, um bei einem derartigen Ausschalten ein Verschieben der Arbeitsklinge von der erfassten Betriebsposition in eine zugeordnete Stopp-Position, und somit eine Immobilisierung der Arbeitsklinge in der zugeordneten Stopp-Position, zu ermöglichen.

Erfindungsgemäß weist die Sensoranordnung mindestens zwei magnetische, induktive, kapazitive, optische und/oder mechanische Sensoren auf.

Somit kann die Bereitstellung einer Werkzeugmaschine mit einer betriebssicheren und zuverlässigen Sensoranordnung ermöglicht werden.

Der mindestens eine Sensor ist bevorzugt gehäusefest in einem Werkzeuggehäuse der Werkzeugmaschine angeordnet.

Somit kann eine robuste und stabile Anordnung des Sensors in bzw. an der Werkzeugmaschine ermöglicht werden.

Gemäß einer Ausführungsform sind die mindestens zwei Sensor Hallsensoren.

Die Erfindung ermöglicht somit die Bereitstellung einer Werkzeugmaschine mit einer Sensoranordnung, die einen einfachen und kostengünstigen Sensor aufweist, dessen Betrieb insbesondere durch Verschmutzungen nicht beeinträchtigt wird.

Erfindungsgemäß ist den mindestens zwei Sensor mindestens ein Signalgeber zugeordnet.

Somit kann die Sensoranordnung auf einfache Art und Weise an unterschiedlichen Komponenten der Werkzeugmaschine angeordnet werden.

Der mindestens eine Signalgeber ist erfindungsgemäß relativ zu den mindestens zwei Sensoren beweglich und an der mindestens einen Arbeitsklinge und/oder einer Maschinenkomponente befestigt, die zur Erzeugung der Hubbewegung der Arbeitsklinge in eine Dreh- und/oder Längsbewegung versetzt wird.

Somit kann die Bereitstellung einer Werkzeugmaschine mit einer betriebssicheren und robusten Sensoranordnung ermöglicht werden.

Erfindungsgemäß sind die Sensoren bezogen auf eine Drehwelle in einem Winkel von 90° zueinander versetzt angeordnet. Der mindestens eine Signalgeber ist ein axial magnetisierten Magnetring, der einen Südpol und einen von diesem über einen zugeordneten Polspalt beabstandeten Nordpol aufweist.

Gemäß einer Ausführungsform ist ein Exzenterantrieb zum Antrieb der Arbeitsklinge vorgesehen, wobei die Maschinenkomponente dem Exzenterantrieb zugeordnet ist.

Die Erfindung ermöglicht somit die Bereitstellung einer Werkzeugmaschine mit einer Sensoranordnung, die an einem der Arbeitsklinge zugeordneten Antriebselement vorgesehen ist und somit unabhängig vom Arbeitsklingentyp sowie von einer Bewegungsrichtung der Arbeitsklinge ist.

Bevorzugt sind eine erste Arbeitsklinge mit einer Vielzahl von ersten Zähnen und eine zweite Arbeitsklinge mit einer Vielzahl von zweiten Zähnen vorgesehen, wobei die ersten Zähne und die zweiten Zähne in der Stopp-Position deckend zueinander angeordnet sind.

Somit kann die Bereitstellung einer Werkzeugmaschine ermöglicht werden, deren Arbeitsklinge beim Ausschalten in eine Stopp-Position verfahrbar ist, die einer möglichst großen Schneidöffnung entspricht, sodass auf einfache Art und Weise eine komfortable Wiederinbetriebnahme der Werkzeugmaschine ermöglicht werden kann. Darüber hinaus sind die Arbeitsklingen in dieser Stopp-Position weitgehend zum Transport geschützt.

Die erste Arbeitsklinge ist bevorzugt zum Ausführen der Hubbewegung antreibbar und die zweite Arbeitsklinge ist vorzugsweise nach Art einer stillstehenden Arbeitsklinge ausgebildet.

Die Erfindung ermöglicht somit die Bereitstellung einer Werkzeugmaschine mit einer Sensoranordnung, deren Aufbau durch Verwendung einer stillstehenden Arbeitsklinge vereinfacht werden kann.

Gemäß einer Ausführungsform ist die Werkzeugmaschine nach Art einer Hecken- oder Strauchschere ausgebildet.

Die Erfindung ermöglicht somit die Bereitstellung einer Hecken- oder Strauchschere, bei der durch Verwendung einer Sensoranordnung eine der Arbeitsklinge zugeordnete Betriebsposition insbesondere beim Ausschalten auf einfache Art und Weise erfasst werden kann, um bei einem derartigen Ausschalten ein Verschieben der Arbeitsklinge von der erfassten Betriebsposition in eine zugeordnete Stopp-Position und somit eine Immobilisierung der Arbeitsklinge in der zugeordneten Stopp-Position zu ermöglichen.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine perspektivische Ansicht einer Werkzeugmaschine gemäß einer Ausführungsform, sowie eine vergrößerte Draufsicht auf einen Ausschnitt der Werkzeugmaschine,
Fig. 2 eine perspektivische Explosionsansicht eines Kulissengetriebes der Werkzeugmaschine von Fig. 1,
Fig. 3 eine Schnittansicht des Kulissengetriebes von Fig. 2 mit einer schematischen Detailansicht einer Sensoranordnung gemäß einer Ausführungsform, und
Fig. 4 eine schematische Ansicht von Signalen, die durch Auswertung von mit der Sensoranordnung von Fig. 1 bis 3 erzeugten Sensorsignalen erzeugbar sind.

### Beschreibung der Ausführungsbeispiele

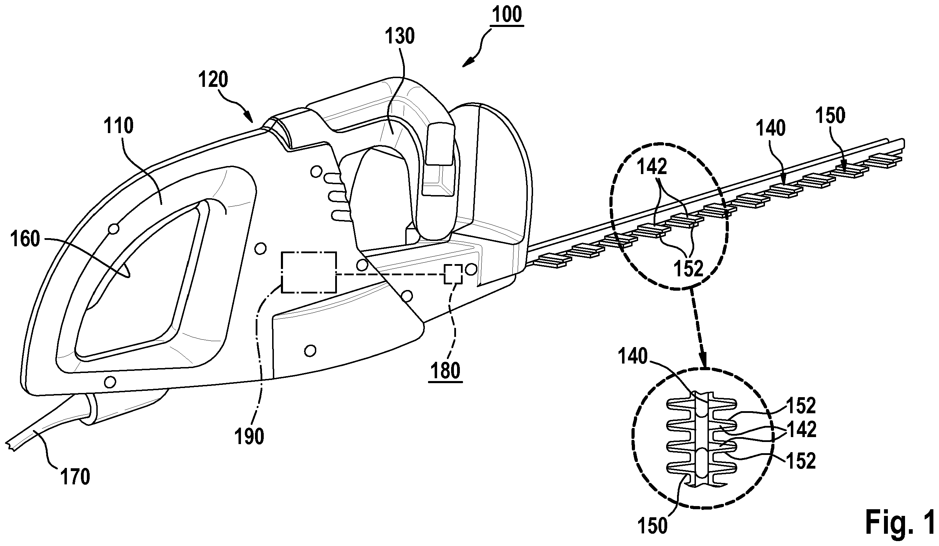

Fig. 1 zeigt eine mit einer Sensoranordnung 180 und einer zugeordneten Auswerte- und Steuereinheit 190 versehene, motorisch antreibbare Werkzeugmaschine 100 gemäß einer Ausführungsform. Diese hat illustrativ mindestens eine erste und eine zweite Arbeitsklinge 140 bzw. 150 und ist beispielhaft nach Art einer Heckenschere ausgebildet. Deshalb wird die Werkzeugmaschine 100 nachfolgend zur Vereinfachung der Beschreibung auch als die "Heckenschere 100" bezeichnet. Es wird jedoch darauf hingewiesen, dass die Werkzeugmaschine 100 lediglich beispielhaft nach Art einer Heckenschere ausgebildet ist und nicht zur Einschränkung der Erfindung. Diese kann vielmehr auch bei anderen, motorisch antreibbaren Werkzeugmaschinen verwendet werden, die mindestens eine bewegliche bzw. verschiebbare Arbeitsklinge aufweisen und bei denen die erfindungsgemäße Sensoranordnung 180 sowie die erfindungsgemäße Auswerteund Steuereinheit 190 Anwendung finden können.

Illustrativ ist die Heckenschere 100 zum netzabhängigen Betrieb mit einer Netzzuleitung 170 versehen. Darüber hinaus oder alternativ hierzu kann die Heckenschere 100 zur mechanischen und elektrischen Verbindung mit einem oder mehreren Akkupacks ausgebildet sein, um somit auch oder alternativ einen netzunabhängigen Betrieb zu ermöglichen.

Die Heckenschere 100 weist illustrativ ein Werkzeuggehäuse 120 auf, an dem beispielhaft ein erster Handgriff 110 und ein zweiter Handgriff 130 angeordnet sind. Im Bereich des ersten Handgriffs 110 ist ein nach Art einer Drucktaste ausgebildetes Bedienelement 160 eines elektrischen Betriebsschalters angeordnet. Das Bedienelement 160 dient zum Ein- und Ausschalten eines der Heckenschere 100 zugeordneten Antriebsmotors, der z. B. nach Art eines elektronisch kommutierten Motors oder eines bürstenbehafteten Motor ausgebildet sein kann und zum Antrieb mindestens einer der Arbeitsklingen 140, 150 dient, die illustrativ in Längsrichtung nach vorn - bzw. in Fig. 1 nach rechts hinten - aus dem Werkzeuggehäuse 120 austreten.

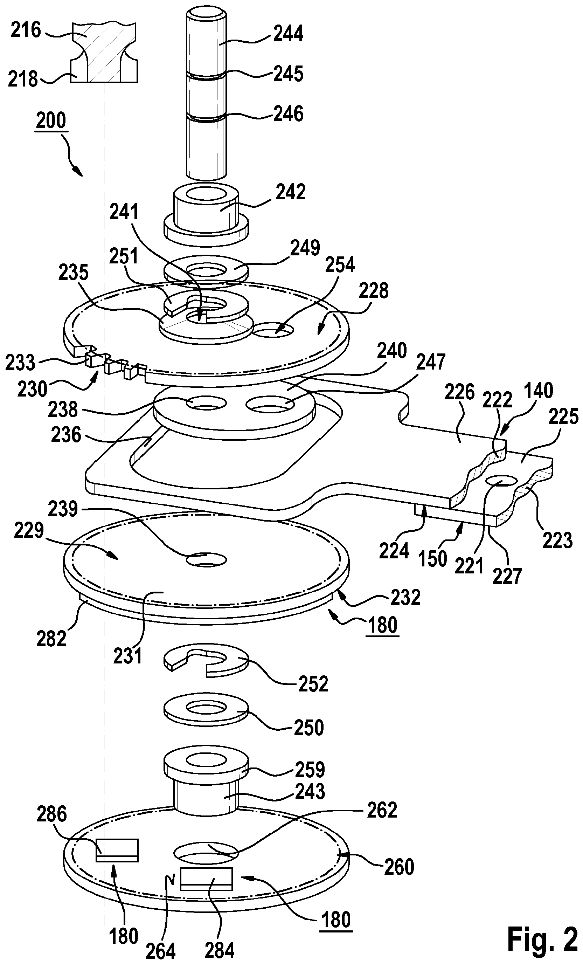

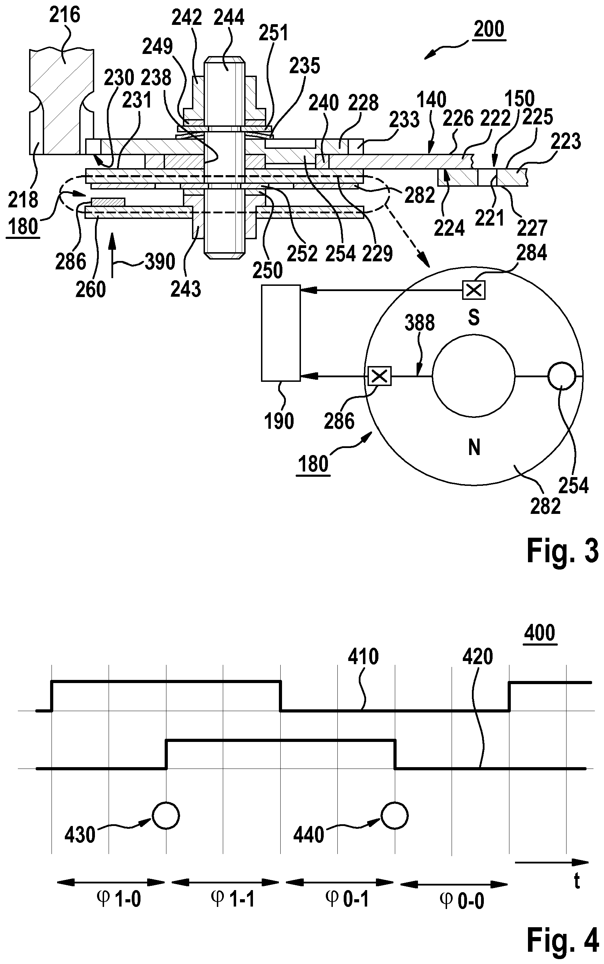

Gemäß einer Ausführungsform ist mindestens eine der Arbeitsklingen 140, 150 von dem Antriebsmotor, der in Fig. 2 und 3 nur schematisch anhand einer diesem zugeordneten Motorwelle 216 abgebildet ist, zum Ausführen einer Hubbewegung antreibbar. Hierzu wird eine Drehbewegung der Motorwelle (216 in Fig. 2 und 3) über ein Kulissengetriebe (200 in Fig. 2 und 3) in eine in axialer Richtung der Arbeitsklingen 140, 150 hin- und hergehende Bewegung der mindestens einen Arbeitsklinge 140, 150 umgewandelt.

Illustrativ ist nur die Arbeitsklinge 140 zu einer Hubbewegung antreibbar, während die Arbeitsklinge 150 nach Art einer stillstehenden Arbeitsklinge ausgebildet ist. Dies ermöglicht eine Vereinfachung des Aufbaus der Heckenschere 100 und somit eine Reduzierung von deren Herstellungskosten. Es wird jedoch darauf hingewiesen, dass die Verwendung der stillstehenden Arbeitsklinge 150 lediglich beispielhaften Charakter hat und nicht zur Einschränkung der Erfindung dient. Diese kann vielmehr auch bei Heckenscheren mit zwei jeweils zu Hubbewegungen antreibbaren Arbeitsklingen Anwendung finden. Darüber hinaus wird darauf hingewiesen, dass der Begriff "Hubbewegung" im Kontext der vorliegenden Erfindung alle Bewegungen umfasst, mit denen zumindest eine der Arbeitsklingen antreibbar ist, um eine oben beschriebene Schneid- bzw. Trennbewegung der Arbeitsklingen zu erzeugen.

Die Arbeitsklinge 140 weist bevorzugt eine Vielzahl von Zähnen 142 auf und die Arbeitsklinge 150 weist bevorzugt eine Vielzahl von Zähnen 152 auf, wie in einem vergrößerten Ausschnitt gezeigt. Die Zähne 142 und die Zähne 152 sind illustrativ deckend zueinander angeordnet. Dies entspricht einer beispielhaften Stopp-Position der Arbeitsklinge 140 bzw. der Arbeitsklingen 140, 150 relativ zueinander, in der eine möglichst große Schneid- bzw. Trennöffnung zwischen den Arbeitsklingen 140, 150 bei ausgeschalteter Heckenschere 100 eingestellt ist. Alternativ hierzu können die Arbeitsklingen 140, 150 in der Stopp-Position der Arbeitsklinge 140 einen möglichst großen Versatz zueinander aufweisen, d. h. bei ausgeschalteter Heckenschere 100 derart relativ zueinander angeordnet sein, dass die Zähne 142 jeweils in entsprechenden Öffnungen angeordnet sind, die jeweils zwischen benachbarten Zähnen 152 ausgebildet werden, um somit ein entsprechendes Verletzungsrisiko für einen Benutzer der Heckenschere 100 zumindest bei einem Transport der Heckenschere 100 zu reduzieren. Hierbei kann z. B. eine dieser vorgegebenen Stopp-Positionen voreingestellt sein oder jede dieser Stopp-Positionen kann über ein zugeordnetes Auswählelement, z. B. eine zugeordnete Drucktaste, von einem Benutzer der Heckenschere 100 auswählbar sein.

Gemäß einer Ausführungsform wird die Arbeitsklinge 140 beim Ausschalten bzw. bei einer Außerbetriebnahme der Heckenschere 100 automatisch in die zugeordnete Stopp-Position verfahren. Hierzu dient die Sensoranordnung 180, die dazu ausgebildet ist, zumindest beim Ausschalten der Heckenschere 100 eine der Arbeitsklinge 140 zugeordnete Betriebsposition zu erfassen, um ein Verschieben der Arbeitsklinge 140 von der erfassten Betriebsposition in die zugeordnete Stopp-Position zu ermöglichen. Darüber hinaus oder alternativ hierzu kann die Arbeitsklinge 140 auch beim Einschalten bzw. bei einer Inbetriebnahme der Heckenschere 100 automatisch in die zugeordnete Stopp-Position verfahren werden, die in diesem Fall eine Start-Position repräsentiert.

Fig. 2 zeigt ein der Heckenschere 100 von Fig. 1 zugeordnetes, beispielhaftes Kulissengetriebe 200. Dieses ist z. B. über eine zugeordnete Drehwelle 244 und zugeordnete Lagerbuchsen 242, 243 in dem Werkzeuggehäuse 120 der Heckenschere 100 gelagert und illustrativ über ein Ritzel 218 einer Motorwelle 216 eines Antriebsmotors der Heckenschere 100 antreibbar. Es wird jedoch darauf hingewiesen, dass eine geeignete Lagerung des Kulissengetriebes 200 sowie ein Aufbau eines geeigneten Antriebsmotors und dessen Funktionsweise dem Fachmann hinreichend bekannt sind, sodass hier zwecks Knappheit der Beschreibung auf eine eingehende Beschreibung hiervon verzichtet wird.

Gemäß einer Ausführungsform ist das Kulissengetriebe 200 zum hubförmigen Antrieb der Arbeitsklinge 140 der Heckenschere 100 von Fig. 1 ausgebildet. Die stillstehende Arbeitsklinge 150 der Heckenschere 100 von Fig. 1 hat beispielhaft mindestens eine Befestigungsöffnung 221, über die die Arbeitsklinge 150 starr im Werkzeuggehäuse 120 von Fig. 1 befestigt ist. Diese Befestigungsöffnung 221 ist illustrativ an einem gehäuseseitigen Ende der Arbeitsklinge 150, d. h. an einem dem Kulissengetriebe 200 zugewandten Ende 223 der Arbeitsklinge 150, vorgesehen.

Die Arbeitsklingen 140, 150 sind beispielhaft unmittelbar zueinander benachbart angeordnet. Im Betrieb der Heckenschere 100 von Fig. 1 gleitet die Arbeitsklinge 140 mit ihrer - in Fig. 2 unteren - Flachseite 224 auf einer - in Fig. 2 oberen - Flachseite 225 der Arbeitsklinge 150 hubförmig hin und her, wobei die Flachseite 224 auf der Flachseite 225 abgestützt ist. Darüber hinaus stützen sich die Arbeitsklingen 140, 150 mit ihren den Flachseiten 224 bzw. 225 jeweils gegenüberliegenden Flachseiten 226 bzw. 227 an einer am Werkzeuggehäuse 120 von Fig. 1 vorgesehenen und im Bereich einer Austrittsöffnung ausgebildeten Führung ab, die bevorzugt derart abgedichtet ist, dass ein Eintreten von Schmutzpartikeln in das Werkzeuggehäuse 120 zumindest weitgehend verhindert werden kann. Des Weiteren ist zumindest die Arbeitsklinge 140 in einer geeigneten Längsführung im Inneren des Werkzeuggehäuses 120 von Fig. 1 gegen Querverschiebung gesichert geführt.

Gemäß einer Ausführungsform weist ein gehäuseseitiges Ende der Arbeitsklinge 140, d. h. ein dem Kulissengetriebe 200 zugewandtes Ende der Arbeitsklinge 140, eine gleitsteinartige Klingenhalterung 222 auf. Diese ist zwischen einer Stirnseite 230 eines mit einer Außenverzahnung 233 versehenen Zahnrads 228 und einer Stirnseite 231 einer Lagerplatte 229 abgestützt, wobei die Stirnseiten 230, 231 einander zugewandt sind. Die Außenverzahnung 233, die über die Außenkontur der Klingenhalterung 222 hinausragt und im Eingriff mit dem Ritzel 218 der Motorwelle 216 steht, ist hierbei zwecks Einfachheit der Zeichnung nur abschnittsweise angedeutet.

Die Klingenhalterung 222 hat illustrativ eine abgerundete, zentrale Ausnehmung, die als Kulissenauge 236 zur Führung und zum Eingriff eines kreisscheibenartigen, exzentrischen Kurbelzapfens 240 sowie zum Durchtritt der Drehwelle 244 dient. Entlang den Rändern des Kulissenauges 236 gleitet der mit dem Zahnrad 228 kreisende Kurbelzapfen 240 quer zur Bewegungsrichtung der Klingenhalterung 222. Dadurch ergibt sich im Betrieb des Kulissengetriebes 200 bzw. der Heckenschere 100 von Fig. 1 die Hubbewegung der Arbeitsklinge 140 wie bei einem Schubkurbelgetriebe.

Der Kurbelzapfen 240 weist eine erste exzentrische Öffnung 238 auf, durch die die in den Lagerbuchsen 242, 243 drehbeweglich gelagerte Drehwelle 244 bevorzugt mit einem vorgegebenen Spiel durchgreift. Darüber hinaus weist der Kurbelzapfen 240 eine zweite exzentrische Öffnung 247 auf, in die ein exzentrischer, stiftartiger Mitnehmer 254 eingreift, der an der Stirnseite 230 des Zahnrads 228 vorgesehen ist und somit eine verdrehgesicherte Fixierung des Kurbelzapfens 240 am Zahnrad 228 ermöglicht. Der Mitnehmer 254 ist beispielhaft als Ausprägung der inneren Stirnseite 230 des Zahnrads 228 ausgestaltet und damit dessen einstückiger Bestandteil.

Das Zahnrad 228 und die Lagerplatte 229, die bevorzugt aus gehärtetem Stahl ausgebildet sind, weisen illustrativ jeweils eine zentrale Öffnung 241 bzw. 239 auf. Diese dienen zur Aufnahme der Drehwelle 244, wobei das Zahnrad 228 und die Lagerplatte 229 bevorzugt auf die Drehwelle 244 aufgepresst werden. Hierdurch können das Zahnrad 228 und die Lagerplatte 229 verdrehgesichert an der Drehwelle 244 befestigt werden und sind somit relativ zueinander verdrehgesichert an der Drehwelle 244 angeordnet.

Die Drehwelle 244 weist illustrativ zwei umlaufende Einstiche 245, 246 zum Einrasten von nach Art von Seegerringen ausgebildeten Sicherungsringen 251, 252 auf. Diese dienen beispielhaft als Axialsicherung des Kulissengetriebes 200. Zwischen dem Sicherungsring 251 und dem Zahnrad 228 ist bevorzugt ein z. B. nach Art einer Well- bzw. Wellenfeder ausgebildeter Federring 235 angeordnet, der zur Verspannung von Zahnrad 228 und Lagerplatte 229 innerhalb der Sicherungsringe 251, 252 ausgebildet ist. Des Weiteren sind zwischen diesen Sicherungsringen 251, 252 und den zugeordneten Lagerbuchsen 242 bzw. 243 bevorzugt Distanzringe 249 bzw. 250 auf der Drehwelle 244 angeordnet. Hierbei hat zumindest die Lagerbuchse 243 einen dem Distanzring 250 zugewandten, umlaufenden Kragen 259, gegen den der Distanzring 250 anliegt.

Gemäß einer Ausführungsform ist am Kulissengetriebe 200 die Sensoranordnung 180 von Fig. 1 angeordnet. Diese weist erfindungsgemäß mindestens zwei magnetischen, induktiven, kapazitiven, optischen und/oder mechanischen Sensoren auf, die bevorzugt gehäusefest in dem Werkzeuggehäuse 120 von Fig. 1 angeordnet sind. Z. B. ist zumindest ein der mindestens zwei Sensoren ein Hallsensor, wobei bevorzugt zwei Hallsensoren 284, 286 Anwendung finden. Diese sind exemplarisch in einem Winkel von 90° zueinander auf einer der Lagerplatte 229 zugewandten Stirnseite 264 einer Trägerplatte 260 befestigt.

Die Trägerplatte 260 ist bevorzugt gehäusefest und insbesondere verdrehgesichert im Werkzeuggehäuse 120 von Fig. 1 angeordnet. Hierzu kann die Trägerplatte 260 z. B. eine zentrale Öffnung 262 zur Aufnahme der Lagerbuchse 243 aufweisen, die ihrerseits verdrehgesichert und gehäusefest im Werkzeuggehäuse 120 von Fig. 1 befestigt ist. Hierbei wird die Trägerplatte 260 bevorzugt derart auf die Lagerbuchse 243 aufgepresst, dass die Trägerplatte 260 mit ihrer mit den Hallsensoren 284, 286 versehenen Stirnseite 264 gegen den Kragen 259 anliegt, wobei der Kragen 259 eine Dicke aufweist, die zur Einstellung eines vorgegebenen Abstands zwischen den beiden Hallsensoren 284, 286 und mindestens einem, diesen gemäß einer Ausführungsform zugeordneten Signalgeber 282 vorgegeben ist.

Der Signalgeber 282 ist bevorzugt relativ zu den Hallsensoren 284, 286 beweglich und vorzugsweise an einer Maschinenkomponente befestigt, die zur Erzeugung der Hubbewegung der Arbeitsklinge 140 in eine Dreh- und/oder Längsbewegung versetzt wird. Illustrativ ist der Signalgeber 282 nach Art eines axial magnetisierten Magnetrings ausgebildet, der an einer der Stirnseite 231 gegenüberliegenden Stirnseite 232 der Lagerplatte 229 befestigt ist und bei Fig. 3 verdeutlicht ist.

Es wird jedoch darauf hingewiesen, dass die Hallsensoren 284, 286 und der Magnetring 282 nur beispielhaft am Kulissengetriebe 200 bzw. an dessen Maschinenkomponenten angeordnet sind. Alternativ hierzu kann die Sensoranordnung 180 auch an anderen Maschinenkomponenten der Heckenschere 100 von Fig. 1 angeordnet sein. Z. B. kann ein geeigneter Signalgeber an der Arbeitsklinge 140 angeordnet sein und ein diesem zugeordneter Hallsensor am Werkzeuggehäuse 120 von Fig. 1 usw. Hierbei dürfte dem Fachmann unmittelbar ersichtlich sein, dass je nach verwendetem Sensor und Signalgeber unterschiedliche Anordnungsmöglichkeiten an der Heckenschere 100 von Fig. 1 bestehen.

Im Betrieb der Heckenschere 100 von Fig. 1 dreht sich die Motorwelle 216 mit dem Ritzel 218 und nimmt dabei das Zahnrad 228 mit, das seinerseits über die Drehwelle 244 die Lagerplatte 229 mitnimmt. Hierdurch gleitet einerseits der exzentrisch mit dem Zahnrad 228 kreisende Kurbelzapfen 240 in dem Kulissenauge 236 der Klingenhalterung 222 quer zur Längsachse der Arbeitsklingen 140, 150 hin und her und bildet somit einen Exzenterantrieb aus. Dieser bewegt die Arbeitsklinge 140 hubförmig, bzw. hin und her entlang deren Längsachse. Dadurch wird die Arbeitsklinge 140 relativ zur Arbeitsklinge 150 bewegt und eine oben beschriebene Schneid- bzw. Trennbewegung erzeugt. Andererseits wird hierbei durch eine Drehbewegung der Lagerplatte 229 der Magnetring 282 mit seinem axial ausgerichteten Magnetfeld relativ zu den gehäuse- bzw. ortsfesten Hallsensoren 284, 286 verdreht, sodass an diesen zugeordnete Sensor- bzw. Hallsignale (410, 420 in Fig. 4) bereitgestellt werden, die beim Ausschalten der Heckenschere 100 von Fig. 1 zum Verfahren bzw. Verschieben der Arbeitsklinge 140 in ihre zugeordnete Stopp-Position ausgewertet werden können, wie unten bei Fig. 4 beschrieben.

Fig. 3 zeigt das Kulissengetriebe 200 von Fig. 2 zur Verdeutlichung einer beispielhaften Ausgestaltung der Sensoranordnung 180 von Fig. 1 und 2, gesehen in Richtung eines Pfeils 390. Hierbei weist der Magnetring 282 bevorzugt einen Südpol (S) und einen von diesem über einen zugeordneten Polspalt 388 beabstandeten Nordpol (N) auf und ist derart an der Lagerplatte 229 befestigt, dass der Polspalt 388 im Bereich des exzentrischen, stiftartigen Mitnehmers 254 angeordnet ist. Dieser ist beispielhaft in einer vordersten Stellung illustriert, in der der Mitnehmer 254 nächstliegend zur Arbeitsklinge 150 angeordnet ist.

Darüber hinaus verdeutlicht die Fig. 3 auch die bevorzugte rechtwinklige Anordnung der Hallsensoren 284, 286, die illustrativ über geeignete Leitungen mit der Steuer- und Auswerteeinheit 190 von Fig. 1 verbunden sind. Diese sind derart an der Trägerplatte 260 angeordnet, dass der Hallsensor 284 in der vordersten Stellung des Mitnehmers 254 dem Südpol S gegenüberliegt und der Hallsensor 286 dem Polspalt 388.

Fig. 4 zeigt ein Messdiagramm 400 mit beispielhaften Hallsignalen 410, 420, die im Betrieb der Heckenschere 100 von Fig. 1 von den Hallsensoren 284 bzw. 286 von Fig. 3 bereitgestellt werden, wobei der in Fig. 3 gezeigte Magnetring 282 exemplarisch im Uhrzeigersinn gedreht wird. Die Hallsignale 410, 420 weisen beispielhaft einen Wert von "0" bzw. "tief" auf, wenn der Südpol S des Magnetrings 282 von Fig. 3 dem entsprechenden Hallsensor 284 bzw. 286 gegenüberliegt, und einen Wert von "1" bzw. "hoch", wenn der Nordpol N des Magnetrings 282 von Fig. 3 dem entsprechenden Hallsensor 284 bzw. 286 gegenüberliegt. Ein Übergang zwischen diesen Werten liegt dann in den Hallsignalen 410, 420 vor, wenn der Polspalt 388 von Fig. 3 dem entsprechenden Hallsensor 284 bzw. 286 gegenüberliegt.

Dementsprechend liegt an einer mit 430 gekennzeichneten Position der Nordpol N des Magnetrings 282 dem Hallsensor 284 gegenüber, während der Polspalt 388 dem Hallsensor 286 gegenüberliegt und somit der Mitnehmer 254 in seinerin Fig. 3 - hintersten Stellung ist, in der der Mitnehmer 254 am Weitesten von der Arbeitsklinge 150 von Fig. 1 entfernt ist. In dieser hintersten Stellung des Mitnehmers 254 und somit der Arbeitsklinge 140 von Fig. 1 überdecken deren Zähne 142 bevorzugt Zähne 152 der Arbeitsklinge 150, die in Längsrichtung der Arbeitsklinge 140 gesehen, hinter den Zähnen 142 angeordnet sind. Deshalb kann diese hinterste Stellung auch als "hintere Öffnungsstellung" der Arbeitsklingen 140, 150 bezeichnet werden.

An einer mit 440 gekennzeichneten Position liegt dahingegen der Südpol S des Magnetrings 282 dem Hallsensor 284 gegenüber, während der Polspalt 388 dem Hallsensor 286 gegenüberliegt und somit der Mitnehmer 254 in seiner vordersten Stellung ist, wie in Fig. 3 gezeigt. In dieser vordersten Stellung des Mitnehmers 254 und somit der Arbeitsklinge 140 überdecken deren Zähne 142 bevorzugt Zähne 152 der Arbeitsklinge 150, die in Längsrichtung der Arbeitsklinge 140 gesehen vor den Zähnen 142 angeordnet sind. Deshalb kann diese vorderste Stellung auch als "vordere Öffnungsstellung" der Arbeitsklingen 140, 150 bezeichnet werden.

An einer zwischen den Positionen 430, 440 gelegenen Position, in der das Hallsignal 410 von "1" auf "0" übergeht, sowie an einer der Position 430 vorgelagerten Position und einer der Position 440 nachgelagerten Position, an denen das Hallsignal 410 jeweils von "0" auf "1" übergeht, ist der Polspalt 388 jeweils dem Hallsensor 284 gegenüberliegend und der Mitnehmer 254 befindet sich somit jeweils in einer entsprechenden Mittelstellung. In dieser Mittelstellung des Mitnehmers 254 und somit der Arbeitsklinge 140 liegen deren Zähne 142 in Längsrichtung der Arbeitsklinge 140 gesehen jeweils etwa mittig zwischen benachbarten Zähnen 152 der Arbeitsklinge 150 und verschließen somit die zwischen diesen ausgebildeten Öffnungen. Deshalb kann diese mittige Stellung auch als "mittlere Verschlussstellung" der Arbeitsklingen 140, 150 bezeichnet werden.

Gemäß einer Ausführungsform werden die Hallsignale 410, 420 von der Auswerte- und Steuereinheit 190 von Fig. 1 wie oben beschrieben ausgewertet, um jeweils eine aktuelle Betriebsposition der Arbeitsklinge 140 von Fig. 1 zu bestimmen. Dies erfolgt zumindest beim Ausschalten der Heckenschere 100 von Fig. 1, sodass die Arbeitsklinge 140 durch eine geeignete Ansteuerung von der Auswerte- und Steuereinheit 190 ausgehend von ihrer jeweils aktuellen Betriebsposition in die hintere oder die vordere Öffnungsstellung verfahren bzw. verschoben werden kann, die somit die bei Fig. 1 beschriebene Stopp-Position repräsentiert. Alternativ hierzu kann wie oben beschrieben z. B. auch die mittlere Verschlussstellung als Stopp-Position ausgewählt werden.

## Patentansprüche

1. Werkzeugmaschine (100) mit mindestens einer zum Ausführen einer Hubbewegung antreibbaren Arbeitsklinge (140), wobei eine Sensoranordnung (180) vorgesehen ist, die dazu ausgebildet ist, zumindest beim Ausschalten der Werkzeugmaschine (100) eine der Arbeitsklingen (140) zugeordnete Betriebsposition zu erfassen, um ein Verschieben der Arbeitsklinge (140) von der erfassten Betriebsposition in eine zugeordnete Stopp-Position zu ermöglichen, wobei die Sensoranordnung (180) mindestens zwei magnetische und/oder induktive Sensoren (284, 286) aufweist und den mindestens zwei Sensoren (284, 286) mindestens ein Signalgeber (282) zugeordnet ist, wobei der mindestens eine Signalgeber (282) relativ zu den mindestens zwei Sensoren (284, 286) beweglich ist und an der mindestens einen Arbeitsklinge (140) und/oder einer Maschinenkomponente (229) befestigt ist, die zur Erzeugung der Hubbewegung der Arbeitsklinge (140) in eine Dreh- und/oder Längsbewegung versetzbar ist, **dadurch gekennzeichnet, dass** die Sensoren (284, 286) bezogen auf eine Drehwelle (244) in einem Winkel von 90° zueinander versetzt angeordnet sind, wobei der mindestens eine Signalgeber (282) ein axial magnetisierter Magnetring (282) ist, der einen Südpol (S) und einen von diesem über einen zugeordneten Polspalt (388) beabstandeten Nordpol (N) aufweist.

2. Werkzeugmaschine nach Anspruch 1, **dadurch gekennzeichnet, dass** die mindestens zwei Sensoren (284, 286) gehäusefest in einem Werkzeuggehäuse (120) der Werkzeugmaschine (100) angeordnet sind.

3. Werkzeugmaschine nach Anspruch 1 oder 2, **dadurch gekennzeichnet, dass** die mindestens zwei Sensoren (284, 286) Hallsensoren sind.

4. Werkzeugmaschine nach einem der Ansprüche 1 bis 3, **dadurch gekennzeichnet, dass** ein Exzenterantrieb (226, 228, 240) zum Antrieb der Arbeitsklinge (140) vorgesehen ist, wobei die Maschinenkomponente (229) dem Exzenterantrieb (226, 228, 240) zugeordnet ist.

5. Werkzeugmaschine nach einem der vorhergehenden Ansprüche, **dadurch gekennzeichnet, dass** eine erste Arbeitsklinge (140) mit einer Vielzahl von ersten Zähnen (142) und eine zweite Arbeitsklinge (150) mit einer Vielzahl von zweiten Zähnen (152) vorgesehen sind, wobei die ersten Zähne (142) und die zweiten Zähne (152) in der Stopp-Position deckend zueinander angeordnet sind.

6. Werkzeugmaschine nach Anspruch 5, **dadurch gekennzeichnet, dass** die erste Arbeitsklinge (140) zum Ausführen der Hubbewegung antreibbar ist und die zweite Arbeitsklinge (150) nach Art einer stillstehenden Arbeitsklinge ausgebildet ist.

7. Werkzeugmaschine nach einem vorhergehenden Ansprüche, die nach Art einer Hecken- oder Strauchschere ausgebildet ist.

## Claims

1. Machine tool (100) having at least one working blade (140) which can be driven so as to perform a reciprocating movement, wherein a sensor arrangement (180) is provided which is designed to detect an operating position assigned to the working blade (140) at least upon the deactivation of the machine tool (100), in order to permit a displacement of the working blade (140) from the detected operating position into an assigned stop position, wherein the sensor arrangement (180) has at least two magnetic and/or inductive sensors (284, 286), and the at least two sensors (284, 286) are assigned at least one signal transducer (282), wherein the at least one signal transducer (282) is movable relative to the at least two sensors (284, 286) and is fastened to the at least one working blade (140) and/or to a machine component (229) which can be set in a rotational and/or longitudinal movement for the purposes of generating the reciprocating movement of the working blade (140), **characterized in that** the sensors (284, 286) are arranged so as to be offset with respect to one another by an angle of 90° in relation to a rotary shaft (244), wherein the at least one signal transducer (282) is an axially magnetised magnet ring (282) which has a south pole (S) and a north pole (N) spaced apart from said south pole by an associated pole gap (388).

2. Machine tool according to Claim 1, **characterized in that** the at least two sensors (284, 286) are arranged in a tool housing (120) of the machine tool (100) so as to be fixed with respect to said housing.

3. Machine tool according to Claim 1 or 2, **characterized in that** the at least two sensors (284, 286) are Hall sensors.

4. Machine tool according to one of Claims 1 to 3, **characterized in that** an eccentric drive (226, 228, 240) is provided for driving the working blade (140), wherein the machine component (229) is assigned to the eccentric drive (226, 228, 240).

5. Machine tool according to one of the preceding claims, **characterized in that** a first working blade (140) with a multiplicity of first teeth (142) and a second working blade (150) with a multiplicity of second teeth (152) are provided, wherein the first teeth (142) and the second teeth (152) are arranged so as to overlap one another in the stop position.

6. Machine tool according to Claim 5, **characterized in that** the first working blade (140) can be driven so as to perform the reciprocating movement, and the second working blade (150) is formed in the manner of a static working blade.

7. Machine tool according to one of the preceding claims, which is designed as a hedge trimmer or bush trimmer.

## Revendications

1. Machine-outil (100) comprenant au moins une lame de travail (140) pouvant être entraînée pour exécuter un mouvement de va-et-vient, dans laquelle il est prévu un agencement de capteurs (180), qui est conçu pour détecter, au moins lors de l'arrêt de la machine-outil (100), une position de fonctionnement associée à la lame de travail (140), afin de permettre un déplacement de la lame de travail (140) de la position de fonctionnement détectée à une position d'arrêt associée, dans laquelle l'agencement de capteurs (180) présente au moins deux capteurs magnétiques et/ou inductifs (284, 286) et au moins un émetteur de signaux (282) est associé auxdits au moins deux capteurs (284, 286), dans laquelle ledit au moins un émetteur de signaux (282) est mobile par rapport auxdits au moins deux capteurs (284, 286) et est fixé sur ladite au moins une lame de travail (140) et/ou sur un composant de la machine (229), qui peut être déplacé en mouvement de rotation et/ou de translation longitudinale pour la production du mouvement de course de la lame de travail (140), **caractérisée en ce que** les capteurs (284, 286) sont disposés avec un décalage d'un angle de 90° l'un par rapport à l'autre par rapport à un arbre de rotation (244), dans laquelle ledit au moins un émetteur de signaux (282) est un anneau magnétique magnétisé axialement (282), qui présente un pôle Sud (S) et un pôle Nord (N) espacé de celui-ci par un entrefer polaire associé (388).

2. Machine-outil selon la revendication 1, **caractérisée en ce que** lesdits au moins deux capteurs (284, 286) sont disposés solidairement au boîtier dans un boîtier d'outil (120) de la machine-outil (100).

3. Machine-outil selon la revendication 1 ou 2, **caractérisée en ce que** lesdits au moins deux capteurs (284, 286) sont des capteurs de Hall.

4. Machine-outil selon l'une quelconque des revendications 1 à 3, **caractérisée en ce qu'**il est prévu un entraînement excentrique (226, 228, 240) pour l'entraînement de la lame de travail (140), dans laquelle le composant de machine (229) est associé à l'entraînement excentrique (226, 228, 240).

5. Machine-outil selon l'une quelconque des revendications précédentes, **caractérisée en ce qu'**il est prévu une première lame de travail (140) avec une multiplicité de premières dents (142) et une deuxième lame de travail (150) avec une multiplicité de deuxièmes dents (152), dans laquelle les premières dents (142) et les deuxièmes dents (152) sont disposées en recouvrement mutuel dans la position d'arrêt.

6. Machine-outil selon la revendication 5, **caractérisée en ce que** la première lame de travail (140) peut être entraînée pour exécuter le mouvement de va-et-vient et la deuxième lame de travail (150) est formée par une lame de travail immobile.

7. Machine-outil selon l'une quelconque des revendications précédentes, qui est configurée sous forme de taille-haies ou de sculpte-haies.
